(19) Europäisches Patentamt

European Patent Office

Office européen des brevets

(11) **EP 0 948 462 B1**

(12) **FASCICULE DE BREVET EUROPEEN**

(45) Date de publication et mention
de la délivrance du brevet:
**05.03.2003 Bulletin 2003/10**

(51) Int Cl.⁷: $C02F\ 1/68$

(21) Numéro de dépôt: **97952958.3**

(22) Date de dépôt: **19.12.1997**

(86) Numéro de dépôt international:
**PCT/FR97/02361**

(87) Numéro de publication internationale:
**WO 98/028232 (02.07.1998 Gazette 1998/26)**

(54) **COMPOSITION MATRICIELLE ORGANOSILICIQUE A ACTION ANTITARTRE DANS LES MILIEUX AQUEUX**

KESSELSTEIN VERHINDERNDE, ORGANOSILIZIUMVERBINDUNG ENTHALTENDE MATRIXZUSAMMENSETZUNG IN WÄSSERIGEM MITTEL

ORGANOSILIC MATRIX COMPOSITION WITH DISINCRUSTANT ACTION IN AQUEOUS MEDIA

(84) Etats contractants désignés:
**AT BE CH DE DK ES FI FR GB GR IE IT LI LU NL PT SE**

(30) Priorité: **20.12.1996 FR 9616075**

(43) Date de publication de la demande:
**13.10.1999 Bulletin 1999/41**

(73) Titulaire: **RHODIA CHIMIE**
**92408 Courbevoie Cédex (FR)**

(72) Inventeurs:
• **PRUD'HOMME, Christian**
**F-69006 Lyon (FR)**
• **PUSINERI, Christian**
**F-69360 Serezin du Rhône (FR)**

(74) Mandataire: **Trolliet, Maurice et al**
**RHODIA SERVICES**
**Direction de la Propriété Industrielle**
**CRIT-Carrières - BP 62**
**69192 Saint-Fons Cédex (FR)**

(56) Documents cités:
**EP-A- 0 193 369**          **FR-A- 2 707 660**

Remarques:
Le dossier contient des informations techniques présentées postérieurement au dépôt de la demande et ne figurant pas dans le présent fascicule.

**Description**

La présente invention concerne une composition matricielle organosilicique comportant une composition polyorganosiloxane durcissable en un élastomère et une matière active antitartre. Elle concerne encore un procédé pour lutter contre la formation et le dépôt de tartre dans des appareils en contact avec un milieu aqueux, à l'aide de ladite composition matricielle organosilicique.

Dans le présent mémoire, par l'expression "appareils en contact avec un milieu aqueux", on entend définir des appareils comportant une ou plusieurs canalisations faites en métal ou en matière plastique, dans lesquelles circule ou séjourne un milieu aqueux froid ou chaud. Comme appareils répondant à cette définition, on citera par exemple :

des dispositifs industriels de distribution d'eau potable ou non, froide ou chaude ; des appareils échangeurs de chaleur ; des chaudières industrielles génératrices de vapeur d'eau ; des unités de dessalement d'eau de mer ; et d'autres dispositifs industriels comprenant un milieu aqueux renfermant typiquement des cations alcalino-terreux.

Dans le présent mémoire, par l'expression "tartre", on entend définir des dépôts à base essentiellement de carbonate de calcium $CaCO_3$ qui forment des accumulations solides en divers endroits des surfaces en métal ou en matière plastique en contact avec l'eau, et qui sont de nature à diminuer les performances de tel ou tel appareil et à conduire à un vieillissement prématuré de certaines pièces, diminuant ainsi la durée de vie de l'appareil.

Pour lutter contre le phénomène de l'entartrage, divers produits chimiques antitartre ont été mis en oeuvre, parmi lesquels on peut citer :

- les sels de sodium d'acide éthylènediamine-tétracétique ou d'acide nitrilotriacétique (cf. Encyclopédie KIRK-OTHMER, 3ème édition de 1984, volume 2, pages 377 - 381);
- des polymères polaires solubles comme : des polymères dérivés d'acide acrylique ou méthacrylique ou de leurs esters (cf. Encyclopédie KIRK-OTHMER précitée) ; des copolymères dérivés d'acide maléïque et d'acide allylsulfonique (cf. FR-A-2 556 334) ;
- des esters phosphoriques, des polyphosphates de métaux alcalins, des esters d'acide phosphonique (cf. Encyclopédie KIRK-OTHMER précitée, FR-A-2 262 129) ;
- des associations d'un polyphosphate de métal alcalin avec un gluconate de métal alcalin (cf. FR-A-2 040 370) ;
- des associations d'acide orthophosphorique avec un sel de zinc (cf. FR-A-2 155 153) ;

- un acide polyépoxysuccinique (cf. US-A-5 062 962).

Le but essentiel de la présente invention est de proposer, et il s'agit là du premier objet de l'invention, une composition matricielle non encore décrite jusqu'ici :

- dans lequel la matière active antitartre est dispersée au sein d'une matrice silicone appropriée,
- composition matricielle qui, lorsqu'elle est utilisée notamment pour la mise en oeuvre, et il s'agit là du second objet de l'invention, d'un procédé pour lutter contre la formation et le dépôt de tartre dans des appareils en contact avec un milieu aqueux, permet de relarguer (libérer) une quantité contrôlée et adaptée de matière active antitartre en vue de remédier aux différents inconvénients énumérés précédemment à propos de la définition de l'expression "tartre".

Le principe de relargage contrôlé, dans un liquide, d'une matière active minérale dispersée dans une matrice en élastomère silicone était connu de FR-A-2.707.660. Dans cet art antérieur, la matière active minérale à relarguer est formée de molécules de petite taille et consiste dans un solide capable de libérer du chlore actif au contact de l'eau (comme par exemple l'hypochlorite de calcium) pour lutter contre la prolifération de microorganismes et on peut noter que la matrice en élastomère silicone est une matrice spéciale issue du durcissement d'une composition polyorganosiloxane réticulant par des réactions de polycondensation.

La Demanderesse a découvert que, dans le cas d'une autre matière active minérale à libérer consistant maintenant dans un composé chimique formé de molécules bien différentes par leur masse moléculaire élevée, due à leur caractère oligomère ou polymère, ledit composé chimique devant être capable de complexer le calcium, le relargage contrôlé était possible en faisant appel cette fois à des compositions polyorganosiloxanes réticulant par des réactions de polyaddition et des compositions polyorganosiloxanes réticulant par voie radicalaire.

Ainsi, la présente invention, prise dans son premier objet, concerne une composition matricielle organosilicique à action antitartre caractérisée en ce qu'elle comprend :

\* un ingrédient (A) consistant dans une composition polyorganosiloxane partiellement réticulée ou non, durcissable à température ambiante (23°C) ou sous l'effet d'une température supérieure à la température ambiante en un élastomère perméable à la vapeur d'eau, ladite composition polyorganosiloxane étant choisie dans le groupe formé par :

(A1) lescompositions bicomposantes réticulant à température ambiante ou à la chaleur par des réactions de polyaddition, qui comprennent :

(a) 100 parties en poids d'huile polydiorganosiloxane linéaire bloquée à chaque extrémité de chaîne par un motif vinyldiorganosilyle dont les radicaux organiques liés aux atomes de silicium sont choisis parmi les radicaux méthyle, éthyle, et phényle, au moins 60 % molaire de ces radicaux (et de préférence la totalité de ces radicaux) étant des radicaux méthyle, et présentant une viscosité allant de 400 à 50 000 mPa.s à 25°C ;

(b) au moins un polyorganohydrogénosiloxane choisi parmi les homopolymères et les copolymères linéaires, cycliques ou en réseau présentant en moyenne par molécule au moins 3 atomes d'hydrogène liés à des atomes de silicium différents et dont les radicaux organiques liés aux atomes de silicium sont choisis parmi les radicaux méthyle, éthyle et 60 % molaire au moins de ces radicaux (et de préférence la totalité de ces radicaux) étant des radicaux méthyle, et présentant une viscosité allant de 10 à 5 000 mPa.s à 25°C, le produit (b) étant utilisé en quantité telle que le rapport molaire des fonctions hydrure de (b) sur les groupes vinyle de (a) est compris entre 1,1 et 4 ;

(c) une quantité catalytiquement efficace d'un catalyseur au platine ;

(d) 0 à 120 parties en poids, de préférence de 0 à 100 parties en poids, de charge(s) siliceuse(s) pour 100 parties en poids de l'ensemble des polyorganosiloxanes (a) + (b) ;

où jusqu'à 50 % en poids du polymère (a) est remplacé par un copolymère en réseau comportant les motifs triméthylsiloxyles, méthylvinylsiloxyles et $SiO_{4/2}$ dans lequel 2,5 à 10 % molaire des atomes de silicium comportant un groupe vinyle et dans lequel le rapport molaire des groupes triméthytsiloxyles au groupe $SiO_{4/2}$ est compris entre 0,5 et 1 ;

(A2) les compositions monocomposantes réticulant à la chaleur par des réactions de polyaddition (compositions dites de type "Elastomère Vulcanisable à Chaud" de polyaddition), qui comprennent :

(a') 100 parties en poids d'une gomme polydiorganosiloxane qui est un homopolymère ou copolymère linéaire présentant en moyenne par molécule au moins 2 groupes vinyles liés à des atomes de silicium diférents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux (et de préférence la totalité de ces autres radicaux) étant des radicaux méthyle, et ladite gomme présentant une viscosité d'au moins 500.000 mPa.s à 25°C et de préférence comprise entre 1 million et 10 millions de mPa.s et même davantage ;

(b') au moins un polyorganohydrogénosiloxane choisi parmi les homopolymères et les copolymères linéaires présentant en moyenne par molécule au moins 3 atomes d'hydrogène liés à des atomes de silicium différents, situés dans la chaîne et éventuellement en bouts de chaîne, dont les radicaux organiques liés aux atomes de silicium sont choisis parmi les radicaux méthyle, éthyle, phényle, 60 % molaire au moins de ces radicaux (et de préférence la totalité de ces radicaux) étant des radicaux méthyle, et présentant une viscosité allant de 10 à 5 000 mPa.s à 25°C,1e produit (b') étant utilisé en quantité telle que le rapport molaire des fonctions hydrures de (b') sur les groupes vinyle de (a') est compris entre 0,4 et 10 et de préférence entre 1,1 et 4 ;

(c') une quantité catalytiquement efficace d'un catalyseur au platine;

(d') 0,5 à 120 partie(s) en poids, de préférence de 1 à 100 parties en poids, de charge(s) siliceuse(s) pour 100 parties en poids de l'ensemble des polyorganosiloxanes (a') + (b') ;

(A3) les compositions monocomposantes de type "Elastomère Vulcanisable à Chaud", comprenant :

(a") 100 parties en poids d'une gomme polydiorganosiloxane qui est un homopolymère ou un copolymère linéaire présentant en moyenne par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux (et de préférence la totalité de ces autres radicaux) étant des radicaux méthyle, et ladite gomme présentant une viscosité d'au moins 1 million de mPa.s à 25°C et de préférence comprise entre 2 millions et 10 millions de mPa.s et même d'avantage ;

(b") 0,1 à 7 parties en poids d'un péroxyde organique;

(c") 0,5 à 120 parties en poids, de préférence de 1 à 100 parties en poids, de charge(s) siliceuse(s) pour 100 parties en poids de gomme (a") ;

(d") 1 à 10 parties en poids d'huile(s) polydiméthylsiloxane(s) à extrémités silanols, ayant une viscosité allant de 10 à 5.000 mPa.s à 25°C ; et

(e") 0,01 à 4 parties en poids, de préférence de 0,02 à 2 parties, de méthacryloxyalkyltrialcoxysilane ou d'acryloxyalkyltrialcoxysilane ;

* un ingrédient (B), qui est hydrophile et osmotiquement actif, consistant dans une matière active antitartre (B1) choisie parmi les métaphosphates de formule $M_m(PO_3)_m$ (IV) où M est un cation ammonium, sodium, potassium ou aluminium et m varie de 3 à 30, ladite matière active étant prise seule ou en association avec un agent auxiliaire hydrophile (B2), dispersé de façon homogène au sein de l'ingrédient silicone (A), la quantité de matière active (B1) et éventuellement d'agent auxilliaire (B2), par rapport au poids de l'ensemble (A) + (B1) + éventuellement (B2), allant de 5 à 50 % en poids ;

* avec la particularité selon laquelle la matière active antitartre est libérée au cours du temps, dans un milieu aqueux, hors de l'ingrédient silicone (A) durci en élastomère, selon une cinétique sensiblement d'ordre zéro.

Dans le présent mémoire, par l'expression "osmotiquement actif', on entend définir un ingrédient (B), pouvant être la matière active antitartre (B1) elle-même, qui est capable de créer de la pression osmotique au moment de la solubilisation dans l'eau des particules élémentaires de l'ingrédient (B) hydrophile, pour induire la formation de microcraquelures au sein de l'élastomère silicone par lesquelles la matière active pourra être éluée. Si l'hydrophilie de la matière active antitartre (B1) n'est pas suffisante pour induire la formation des microcraquelures, et c'est le cas en général lorsque la matière active n'est pas hygroscopique dans les conditions de l'application au cours de laquelle elle est libérée, on pourra lui adjoindre un agent auxiliaire (B2) présentant l'hydrophilie nécessaire qui créera la pression osmotique induisant la formation des microcraquelures.

La présente invention, prise dans son premier objet, concerne plus particulièrement une composition matricielle organosilicique à action antitartre comportant de préférence de 10 à 35 % en poids de matière active (B1) et éventuellement d'agent auxiliaire (B2) par rapport au poids de l'ensemble (A) + (B1) + éventuellement (B2).

Lorsque l'on utilise un agent auxiliaire (B2), le rapport en poids de la matière active (B1) sur l'agent auxiliaire (B2) peut varier de 0,1 à 10 et, de préférence, de 0,2 à 5.

Les polyorganosiloxanes, constituants principaux des compositions (A) selon l'invention, sont constitués soit de motifs siloxyles de formule générale :

$$R_nSiO_{\frac{4-n}{2}} \qquad (I)$$

et de motifs siloxyles de formule :

$$Z_xR_ySiO_{\frac{4-x-y}{2}} \qquad (II)$$

soit de motifs siloxyles de formule (II), formules dans lesquelles les divers symboles peuvent avoir la signification suivante :

- les symboles R, identiques ou différents, représentent chacun un radical méthyle, éthyle et phényle ;
- les symboles Z, identiques ou différents, représentent chacun un atome d'hydrogène ou un groupement vinyle ;
- n = un nombre entier égal à 0, 1, 2 ou 3 ;
- x = 1;
- y = un nombre entier égal à 0, 1, ou 2 ;
- la somme x + y est comprise entre 1 et 3.

La nature du polyorganosiloxane et donc les rapports entre les motifs siloxyles (I) et (II) et la répartition de ceux-ci est comme on le sait choisie en fonction du traitement de réticulation qui sera effectué sur la composition durcissable (ou vulcanisable) en vue de sa transformation en élastomère.

Les compositions polyorganosiloxanes bicomposantes ou monocomposantes réticulant à température ambiante ou à la chaleur par des réactions de polyaddition, essentiellement par réaction de groupements hydrogéno-silylés sur des groupements vinyl-silylés, en présence d'un catalyseur au platine, sont décrites par exemple dans les brevets US-A-3 220 972, 3 284 406, 3 436 366, 3 697 473 et 4 340 709. Les polyorganosiloxanes entrant dans ces compositions sont constitués par des couples à base d'une part d'un polysiloxane linéaire constitué de motifs (II) dans lesquels le reste Z représente un groupement vinyle, éventuellement associés à des motifs (I), et d'autre part d'un hydrogénopolysiloxane linéaire, éventuellement ramifié ou réticulé, constitué de motifs (II) dans lesquels le reste Z représente alors un atome d'hydrogène, éventuellement associés à des motifs (I).

S'agissant de compositions durcissables à température élevée sous l'action de péroxydes organiques, on peut utiliser des péroxydes tels que le péroxyde de dichloro-2,4 benzoyle, le péroxyde de benzoyle, le perbenzoate de t-butyle, le péroxyde de cumyle, le péroxyde de di-t-butyle. Le polyorganosiloxane ou gomme entrant dans de telles compositions (dénommées simplement de type EVC) est alors constitué essentiellement de motifs siloxyles (II) dans lesquels le reste Z représente un groupement vinyle, éventuellement associés à des motifs (I). De tels EVC sont par exemple décrits dans les brevets US-A-3 142 655, 3 821 140, 3 836 489 et 3 839 266).

Les compositions durcissables (A) selon l'invention peuvent comporter en outre - à côté du (ou des) constituant(s) polyorganosiloxane(s) et du catalyseur - des charges renforçantes qui sont choisies parmi les charges siliceuses.

Les charges renforçantes sont choisies parmi les silices de combustion et les silices de précipitation. Elles ont une surface spécifique, mesurée selon les méthodes BET, d'au moins 50 m$^2$/g, de préférence supérieure à 70 m$^2$/g, une dimension moyenne des particules primaires inférieure à 0,1 micromètre (µm) et une densité apparente inférieure à 200 g/litre.

Ces silices peuvent être incorporées de préférence telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 18 % environ.

Les compositions durcissables (A) peuvent comporter encore en outre : des charges semi-renforçantes ou de bourrage ou servant à adapter la rhéologie, ces charges ayant un diamètre particulaire supérieur à 0,1 µm et étant choisies de préférence parmi le quartz broyé, les argiles calcinées et les terres de diatomées ; un agent de réticulation ; un agent d'adhérence ; et/ou un agent de coloration.

A propos des compositions polyorganosiloxanes (A1), on précisera que la quantité pondérale de catalyseur (c), calculée en poids de platine-métal est généralement comprise entre 1 et 600 ppm, de préférence entre 2 et 200 ppm, basés sur le poids de l'ensemble des organosiloxanes (a) + (b).

Si l'on a besoin de retarder la réticulation, on peut ajouter à la composition polyorganosiloxane (A1) réticulant par des réactions de polyaddition, un inhibiteur du catalyseur au platine. Ces inhibiteurs sont connus. On peut en particulier utiliser les amines organiques, les silazanes, les oximes organiques, les diesters de diacides carboxyliques, les cétones acétyléniques et surtout les alcools acétyléniques qui font partie des inhibiteurs préférés (cf. par exemple FR-A-1 528 464, 2 372 874 et 2 704 553). L'inhibiteur, quand on en utilise un, est engagé à raison de 0,005 à 5 parties en poids, de préférence 0,01 à 3 en poids, pour 100 parties du polyorganosiloxane (a).

A propos des compositions polyorganosiloxanes (A2), on précisera que la gomme (a') est constituée, le long de sa chaîne, de motifs (I) où n = 2, éventuellement associés à des motifs (II) où Z = vinyle et où x = y = 1, et elle est bloquée à chaque extrémité de sa chaîne par un motif (II) où Z = vinyle et où x = 1 et y = 2 ou par un motif (I) où n = 3 ; cependant la présence en mélange avec ces motifs conformes, de motifs de structure différente, par exemple de formule (I) avec n = 1 et/ou $SiO_{4/2}$ et/ou de formule (II) où Z = vinyle et où x = 1 et y = 0, n'est pas exclue dans la proportion d'au plus 2 % par rapport au nombre total des motifs conformes.

On met en oeuvre à titre de constituant (b'), au moins un polyorganohydrogénosiloxane linéaire dont la chaîne est constituée essentiellement de motifs (II) où Z = H et où x = y = 1, éventuellement associés à des motifs (I) où n = 2, cette chaîne étant bloquée à chaque extrémité par un motif (II) où Z = H et où x = 1 et y = 2 ou par un motif (I) où n = 3.

La quantité pondérale de catalyseur (c'), exprimée en poids de platine-métal par rapport au poids de la gomme (a') et du composé hydrogéno-silylé (b'), est comprise entre 0,001 et 1 % et de préférence entre 0,05 et 0,5 %.

Les compositions silicones (A2) peuvent comporter en outre, à côté des constituants (a'), (b'), (c') et (d'), de 1 à 10 parties en poids d'huile(s) polydiméthylsiloxane(s) (e') à extrémités silanols de viscosité à 25°C comprise entre 10 et 5 000 mPa.s, pour 100 parties de gomme (a').

A propos des compositions polyorganosiloxane (A3), on précisera que la gomme (a") est constituée, le long de sa chaîne, de motifs (I) où n = 2, éventuellement associés à des motifs (II) où Z = vinyle et où x = y = 1, et elle est bloquée à chaque extrémité de sa chaîne par un motif (II) où Z = vinyle et où x = 1 et y = 2 ou par un motif (I) où n = 3 ; cependant la présence en mélange avec ces motifs conformes, de motifs de structure différente, par exemple de formule (I) avec n = 1 et/ou $SiO_{4/2}$ et/ou de formule (II) où Z = vinyle et où x = 1 et y = 0, n'est pas exclue dans la proportion d'au plus 2 % par rapport au nombre total des motifs conformes.

Les péroxydes organiques (b") sont utilisés à raison de 0,1 à 7 parties, de préférence 0,2 à 5 parties, pour 100 parties des gommes (a"). Ils sont bien connus des techniciens et comprennent plus spécialement le péroxyde de benzoyle, le péroxyde de dichloro-2,4 benzoyle, le péroxyde de dicumyle, le bis(t-butylpéroxy)-2,5 diméthyl-2,5 hexane, le perbenzoate de t-butyle, le carbonate de péroxy t-butyle et d'isopropyle, le peroxyde de di-t-butyle, le bis(t-butylpéroxy)-1,1 triméthyl-3,3,5 cyclohexane.

A titre d'exemples concrets de ces silanes (e") peuvent être cités :

- le méthacryloxypropyltriméthoxysilane

$$CH_2=C(CH_3)COO(CH_2)_3Si(OCH_3)_3$$

- le méthacryloxypropyltriéthoxysilane

$$CH_2=C(CH_3)COO(CH_2)_3Si(OC_2H_5)_3$$

- l'acryloxypropyltriéthoxysilane

$$CH_2=CH-COO(CH_2)_3Si(OCH_3)_3$$

Revenons maintenant sur la définition de l'ingrédient (B). Comme matière active antitartre (B1), hydrophile ou non, on entend donc définir des composés chimiques capables de complexer le calcium.

Comme matière active de type (B1), on utilise au moins un métaphosphate, possédant des anions cycliques, de formule générale :

$$M_m (PO_3)_m \qquad (IV)$$

dans laquelle : M est un cation ammonium, sodium, potassium ou aluminium ; m est un nombre variant de 3 à 30, de préférence de 5 à 25.

La matière active antitartre (B1) utilisée préférentiellement consiste dans les métaphosphates hydrophiles de formule (IV) où M représente le sodium ou le potassium et m varie de 6 à 22, et, parmi ceux-ci, l'hexamétaphosphate de sodium et l'hexamétaphosphate de potassium sont les plus préférés.

L'agent auxiliaire (B2), quand il est besoin d'en utiliser un, est choisi généralement parmi les sels alcalins et alcalino-terreux dérivés d'acides forts, comme par exemple l'acide sulfurique, l'acide chlorhydrique ou l'acide nitrique. On peut citer à titre d'exemple les chlorures, sulfates ou nitrates alcalins, en particulier de sodium, potassium ou ammonium.

Comme énoncé ci-avant l'ingrédient actif (B) est dispersé de façon homogène au sein de la composition organopolysiloxane durcissable (A). Ce principe actif se présente sous forme d'une poudre à température ambiante ; il est alors souhaitable que ladite poudre présente une granulométrie moyenne comprise entre 1 et 500 µm et, de préférence, entre 20 et 200 µm. Lorsque l'on parle d'un groupe de particules ayant une granulométrie moyenne comprise dans un intervalle donné, il faut comprendre que plus de 50 % en poids des particules a une granulométrie comprise dans l'intervalle (de 50 à 100 % en poids des particules).

Dans le cas d'une composition polyorganosiloxane bicomposante (A1) de polyaddition, généralement on disperse d'abord l'ingrédient actif dans la première partie renfermant les groupements vinyl-silylés et souvent le catalyseur, puis on mélange ensuite l'ensemble (première partie + ingrédient actif en dispersion) avec la seconde partie renfermant les groupements hydrogéno-silylés. Une variante de réalisation consiste à mélanger simultanément l'ingrédient actif (B) avec la première partie et la seconde partie de la composition bicomposante.

Dans les autres cas de compositions organopolysiloxanes monocomposantes (A2) et (A3) de type EVC de polyaddition et de type EVC faisant appel à la mise en oeuvre d'une gomme, la dispersion de l'ingrédient actif est obtenue généralement en réalisant, à température ambiante et à l'abri de l'humidité de l'air, dans un mélangeur conventionnel, un empâtage à partir de la composition organopolysiloxane à l'état liquide et de l'ingrédient actif à l'état solide. A titre d'exemples de mélangeurs on peut citer les malaxeurs à pale, à hélice, à bras ou à ancre, les pétrins, les mélangeurs à cylindres, les mélangeurs à vis. Les divers constituants sont incorporés dans l'appareil mélangeur dans un ordre quelconque. Il est toutefois recommandé de charger :

- s'agissant de la composition (A2) de type EVC de polyaddition : la gomme (a'), puis dans l'ordre la charge siliceuse (d'), l'ingrédient actif (B), éventuellement l'additif (e') et en dernier lieu les composés (b') et (c') ; si la composition doit être stockée avant son utilisation, il peut être souhaitable d'ajouter une quantité efficace d'un inhibiteur de l'action catalytique du platine qui disparait à chaud lors de la vulcanisation de la composition ; on peut ainsi utiliser comme inhibiteur les mêmes composés que ceux dont on a parlé ci-avant dans le présent mémoire à propos des compositions bicomposantes de polyaddition ; l'inhibiteur, quand on en utilise un, est engagé à raison de 0,005 à 5 parties en poids, de préférence 0,01 à 3 parties en poids, pour 100 parties de gomme (a');

- s'agissant de la composition (A3) de type EVC :la gomme (a"), puis dans l'ordre la charge siliceuse (c"), l'additif (d") et l'additif (e"), l'ingrédient actif (B) et en dernier lieu le composé (b").

La présente invention, prise dans son second objet, concerne un procédé pour lutter contre la formation et le dépôt de tartre dans des appareils en contact avec un milieu aqueux ; ce procédé est caractérisé en ce qu'il consiste à enchaîner les étapes suivantes :

1) réticulation ou durcissement en élastomère de la composition polyorganosiloxane (A) au sein de laquelle est dispersé l'ingrédient actif (B) ; puis
2) immersion dans le milieu aqueux à traiter d'une quantité adaptée de l'élastomère silicone obtenu à l'issue de l'étape 1 ;

en vue de libérer dans le milieu aqueux une quantité contrôlée de matière active antitartre.

Dans l'étape 1, la réticulation ou durcissement en élastomère est réalisée par chauffage de la composition matricielle organosilicique (A) + (B) à une température allant par exemple de 80°C à 250°C pendant une durée allant par exemple de 30 secondes à 4 heures dans le cas de la composition matricielle à base d'une composition de type EVC ; ou à une température allant par exemple de 65°C à 200°C pendant une durée allant par exemple de 30 minutes à 4 heures dans le cas d'une composition matricielle à base d'une composition polyorganosiloxane de polyaddition utilisant un catalyseur métallique.

Dans le cadre de l'étape 1, la composition matricielle organosilicique (A) + (B) selon l'invention, avant réticulation, peut être extrudée ou moulée sous la forme de modules unitaires de formes variées telles que par exemple des sphères, des cylindres, des cubes, des films, des rubans, des cordons, lesdits modules pouvant éventuellement être intégrés dans des cartouches.

On peut, en particulier, mouler la composition matricielle organosilicique sous la forme d'un cylindre de diamètre compris par exemple entre 0,1 et 5 cm.

Plus précisément dans le cadre de l'étape 2, après réticulation ou durcissement, les modules en élastomère silicone obtenu peuvent être découpés, pour le traitement antitartre du milieu aqueux, à la longueur désirée de manière à ce que chaque module unitaire comporte une quantité suffisante en matière active antitartre pour une libération continue, de préférence pendant au moins 2 mois. Au bout de cette période les modules sont remplacés.

De façon surprenante, on a découvert que les compositions matricielles organosiliciques (A) + (B) selon l'invention, après réticulation ou durcissement en élastomère silicone, ont des caractéristiques physiques suffisantes pour les applications envisagées dans le présent mémoire et libèrent la matière active antitartre de façon contrôlée de préférence pendant au moins 2 mois.

De façon surprenante encore, on a trouvé que la composition matricielle organosilicique (A) + (B) selon l'invention, après réticulation ou durcissement en élastomère, libère l'ingrédient actif antitartre suivant une cinétique sensiblement d'ordre zéro et de façon continue, et cela jusqu'à ce que au moins 50 % en poids de l'ingrédient soit libéré. L'avantage considérable apporté par cette composition matricielle organosilicique est donc qu'il est très facile d'extrapoler la diffusion continue de l'ingrédient actif après une mesure de la quantité libérée représentant 10 à 15 % en poids de l'ingrédient actif initial puisque l'on sait que la cinétique de diffusion est sensiblement d'ordre zéro et qu'au moins 50 % de l'ingrédient actif sera libéré suivant cette cinétique.

On pense que, en dépit de sa très faible solubilité dans l'élastomère silicone, l'ingrédient actif (B) est libéré au cours du temps non par un mécanisme de diffusion au sein de l'élastomère, mais selon un mécanisme de microcraquelures qui peut être décomposé en quatre étapes suivantes : (i) pénétration de l'eau dans l'élastomère silicone, (2i) hydratation des particules élémentaires de l'ingrédient (B), (3i) déchirure interne du matériau silicone sous l'action de la pression osmotique générée par les grains et (4i) élution de l'ingrédient actif. Ce système présente l'avantage de permettre le contrôle de la libération de l'ingrédient actif par la maîtrise de paramètres fondamentaux tels que notamment la granulométrie (g) des particules de l'ingrédient actif, le taux (t) de l'ingrédient actif au sein de l'élastomère silicone et la quantité d'élastomère immergée dans le milieu aqueux. Plus (g) est petit et plus la vitesse de libération est faible. Plus (t) est grand et plus le flux d'ingrédient actif vers le milieu aqueux récepteur est grand ; à noter que lorsque le taux se situe au-dessus de 50 % en volume, d'une part la réalisation de l'empâtage devient difficile et d'autre part on se situe dans la zone dite de percolation marquée par l'apparition de chemins préférentiels lors de l'élution, du fait de la très grande proximité des grains de l'ingrédient actif.

Les exemples donnés ci-après illustrent l'invention de façon non limitative. Dans tout ce qui suit, les % et parties sont en poids, sauf mentions contraires.

<u>Exemple 1</u> :

    1. Préparation de la composition matricielle organosilicique selon l'invention par mise en oeuvre d'une composition organopolysiloxane bicomposante, réticulant par des réactions de polyaddition :

       1.1- <u>Préparation de la composante n° 1</u> : on homogénéise à température ambiante (23°C) dans un malaxeur les constituants suivants :

-   (a1) : 25 parties de résine silicone comportant 40 % molaire de motifs $(CH_3)_3SiO_{1/2}$, 6 % molaire de motifs $(CH_3)(CH_2 = CH)SiO_{2/2}$ et 53,5 % molaire de motifs $SiO_{4/2}$ et contenant 0,06 fonction vinyle pour 100 g de résine ;

-   (a2) : 75 parties d'une huile polydiméthylsiloxane bloquée à chacune des extrémités de sa chaîne par un motif $(CH_3)_2(CH_2 = CH)SiO_{1/2}$ ; la viscosité de cette huile est de 3500 mPa.s à 25°C, et elle contient 0,0073 fonction vinyle pour 100 g;

-   (c) : 40 ppm calculés en poids, par rapport à l'ensemble (a1) + (a2) + (b) (cf. ci-après), de platine métal apporté par une solution à 0,25 % d'acide chloroplatinique préparée par agitation à température ambiante de 0,6 partie d'acide hexachloroplatinique, 10 parties d'isopropanol, 55 parties de xylène et 6 parties de tétraméthyl-1,1,3,3 divinyl-1,3 disiloxane.

1.2- Préparation de la composante n° 2 : on homogénéise à température ambiante (23°C) dans un malaxeur les constituants suivants :

- (b) : 41 parties de résine silicone liquide hydrogénée, de viscosité 500 mPa.s à 25°C, préparée par hydrolyse de silicate d'éthyle et de $(CH_3)_2HSiCl$ en des quantités correspondant à une mole de silicate pour deux moles de $(CH_3)_2HSiCl$ en solution dans le toluène ; cette résine présente donc un rapport molaire théorique de motifs $(CH_3)_2HSiO_{1/2}$ / $SiO_{4/2}$ de 2 et un rapport molaire réel de 2,23, et elle contient 0,93 fonction SiH pour 100 g de résine ;
- 14,75 parties de la résine (a1) de la composante n° 1 ; et
- 44,25 parties de l'huile vinylée (a2) de la composante n° 1.

1.3- Préparation de la composition matricielle organosilicique selon l'invention : la composition matricielle organosilicique selon l'invention est obtenu par mélange, à température ambiante, de 65,4 parties de la composante n° 1 à 6,6 parties de la composante n° 2 et à 18 parties d'hexamétaphosphate de sodium. Ce mélange est réalisé à l'aide d'un malaxeur en opérant sous une pression de réduite de $100.10^2$ Pa et l'agitation est maintenue pendant 30 minutes de manière à bien disperser l'hexamétaphosphate de sodium.

L'hexamétaphosphate de sodium utilisé présente les caractéristiques granulométriques suivantes :

| Tamis (µm) | Refus cumulés (% en poids) |
|---|---|
| 800 | 0,02 |
| 315 | 15,4 |
| 150 | 54,1 |
| 80 | 75,4 |

Le mélange obtenu est ensuite coulé dans un moule métallique préchauffé à 150°C. Le moule est de forme cylindrique avec un diamètre intérieur de 1,7 cm et une hauteur de 7 cm. Après remplissage, le moule est aussitôt placé dans une étude à 150°C, pendant 1 heure. Après refroidissement et démoulage, la composition matricielle organosilicique réticulée en élastomère, contenant l'hexamétaphosphate de sodium, est découpée en cylindres unitaires de 1 cm de hauteur, dénommés dans ce qui suit : matrices cylindriques.

2. Protocole expérimental de la mesure de la cinétique d'élution dans l'eau :

Chaque matrice cylindrique, contenant 20 % en poids d'hexamétaphosphate de sodium, est immergée dans un récipient fermé contenant 400 ml d'eau distillée ; le récipient est équipé d'une agitation magnétique et il est plongé lui-même dans un bain d'eau thermostaté à 35°C.

Les caractéristiques de la matrice cylindrique immergée sont :

- diamètre : 1,7 cm,
- hauteur : 1 cm,
- masse totale : 2,64 g,
- quantité initiale (Q0) d'hexamétaphosphate de sodium : 0,528 g.

La quantité d'hexamétaphosphate de sodium libérée est suivie par dosage conductimétrique selon la méthode décrite ci-après. La mesure est réalisée avec un conductimètre / résistivimètre TACUSSEL ® de type CDRV 62 équipé d'une cellule RADIOMETER COPENHAGEN TE 100. Au moment de la mesure, la cellule est immergée dans le milieu de libération à 35°C et sous agitation modérée (agitateur magnétique). On lit la conductivité en milli Siemens (m S) que l'on convertit en mg d'hexamétaphosphate de sodium par ml de solution à l'aide d'une courbe d'étalonnage préalablement établie avec des solutions aqueuses d'hexamétaphosphate de 5 mg/l à 2500 mg/l. Les valeurs obtenues sont corrigées pour tenir compte de l'évolution de la conductivité des solutions d'hexamétaphosphate de sodium à 35°C en fonction du temps. Cela permet de déterminer à un instant donné la concentration du milieu de libération en matière antitartre et de calculer la quantité de matière antitartre libérée.

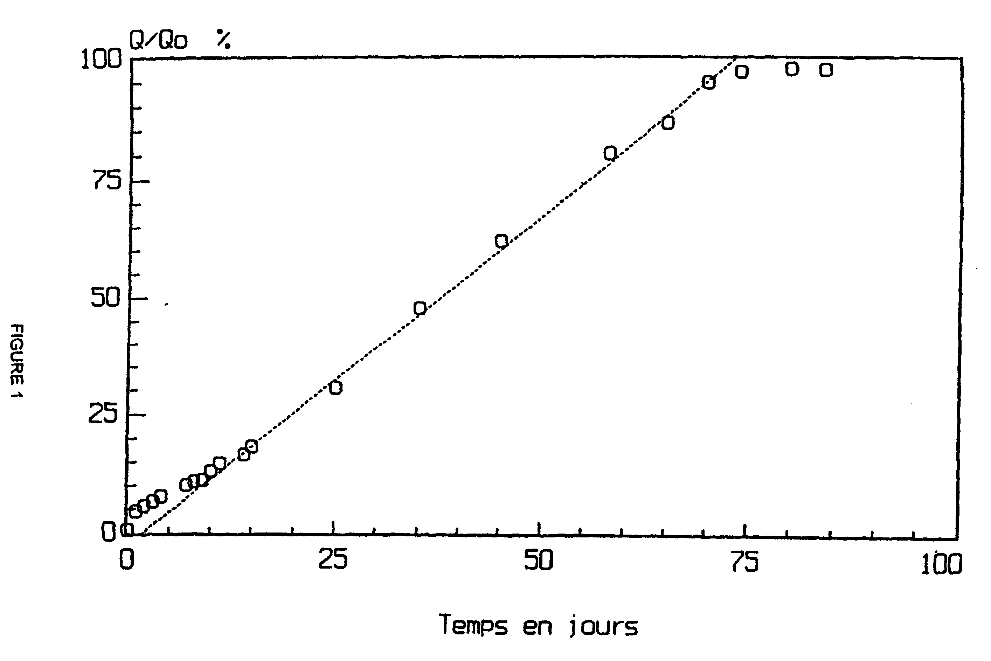

Le dosage réalisé permet de tracer la courbe Q / Q0 = f (t), où Q0 représente la quantité initiale en hexamétaphosphate de sodium et Q la quantité cumulée en hexamétaphosphate de sodium libérée à l'instant t. La courbe Q / Q0 = f (t) est reportée sur la figure 1 donnée en annexe.

Exemple 2 :

1. Préparation de la composition matricielle organosilicique selon l'invention par mise en oeuvre d'une composition organopolysiloxane monocomposante de type EVC :

On mélange intimement à l'aide d'un malaxeur à bras les constituants suivants :

- (a") : 100 parties d'une gomme (diméthyl)(méthylvinyl)polysiloxane bloquée à chacune de ses extrémités par un motif triméthylsiloxy, comprenant dans sa chaîne 720 ppm de grou-

pes vinyles, de viscosité 10 millions de mPa.s à 25°C ;

- (c") : 40 parties de silice de combustion traitée D4 (octaméthylcyclotétrasiloxane) de surface spécifique BET de 300 m$^2$/g ;
- (d") : 3 parties d'un diméthylpolysiloxane linéaire bloqué à ses deux extrémités par des groupements diméthylhydroxysiloxy de viscosité 50 mPa.s à 25°C ; et
- (e") ; 0,6 parties de gammaméthacryloxypropyltriméthoxysilane.

Le mélange est arrêté 30 minutes après la fin de l'introduction de la charge (c"). On enlève du malaxeur la composition homogène venant d'être préparée et qui est appelée mélange-maître (MM).

On transfert le MM sur un mélangeur à 2 cylindres écartés de 1mm, pour incorporer pour 100 parties de MM :

- 54 parties d'hexamétaphosphate de sodium ayant les caractéristiques granulométriques indiquées ci-avant dans l'exemple 1 : cette incorporation est réalisée, progressivement, sur une période de 20 minutes ; et ensuite
- 1,93 partie de péroxyde de dichloro-2,4 benzoyle (catalyseur b") : cette incorporation est réalisée pendant 2 minutes.

La composition catalysée se détache aisément des cylindres du mélangeur. En réglant l'écartement des cylindres à 10 mm et leur largeur à 200 mm, on réalise des ébauches de dimensions 200 x 200 x 10 mm qui sont ensuite introduites dans un moule ayant les mêmes dimensions, puis soumises à une température de 115°C et à l'action d'une presse à plateau développant une pression de 10 MPa. Les plaques moulées ainsi obtenues sont ensuite recuites pendant 4 heures à 200°C. Après refroidissement et démoulage, la composition matricielle organosilicique réticulée en élastomère, contenant l'hexamétaphosphate de sodium et se présentant sous forme de plaques, est découpée en parallélépipèdes de dimensions 35 x 10 x 10 mm, dénommés dans ce qui suit : matrices parallélépipédiques.

2. Protocole expérimental de la mesure de la cinétique d'élution dans l'eau :

La matrice testée, contenant 34,6 % en poids d'hexamétaphosphate de sodium, est immergée dans un récipient fermé contenant 100 ml d'eau distillée ; le récipient est équipé d'une agitation magnétique et il est plongé lui-même dans un bain d'eau thermostaté à 35°C.

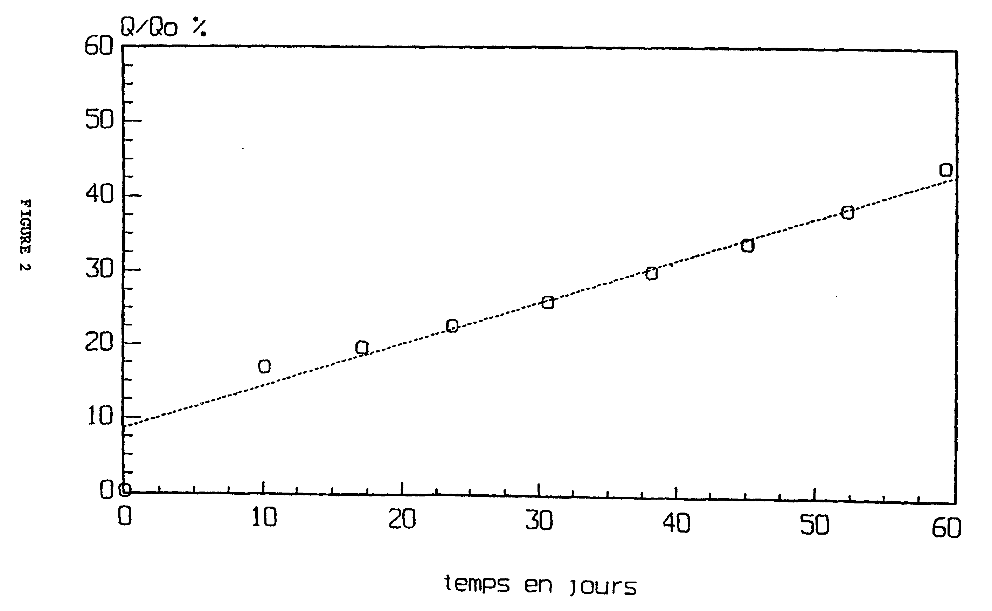

La quantité d'hexamétaphosphate de sodium libérée est suivie par dosage conductimétrique selon la méthode décrite dans l'exemple 1. Ce dosage permet de tracer la courbe Q / Q$_o$ = f (t), pour laquelle la quantité initiale Q$_0$ en hexamétaphosphate

de sodium est égale à 1,88 g dans le cas de la matrice testée ici (ayant une masse totale de 5,43 g) ; la courbe obtenue est reportée sur la figure 2 donnée en annexe.

## Revendications

1. Composition matricielle organosilicique à action antitartre **caractérisée en ce qu'**elle comprend :

  * un ingrédient (A) consistant dans une composition polyorganosiloxane, partiellement réticulée ou non, durcissable à température ambiante (23°C) ou sous l'effet d'une température supérieure à la température ambiante en un élastomère perméable à la vapeur d'eau, ladite composition polyorganosiloxane étant choisie dans le groupe formé par :

    (A1) les compositions bicomposantes réticulant à température ambiante ou à la chaleur par des réactions de polyaddition, qui comprennent :

      (a) 100 parties en poids d'huile polydiorganosiloxane linéaire bloquée à chaque extrémité de chaîne par un motif vinyldiorganosilyle dont les radicaux organiques liés aux atomes de silicium sont choisis parmi les radicaux méthyle, éthyle, et phényle, au moins 60 % molaire de ces radicaux étant des radicaux méthyle, et présentant une viscosité allant de 400 à 50 000 mPa.s à 25°C ;
      (b) au moins un polyorganohydrogénosiloxane choisi parmi les homopolymères et les copolymères linéaires, cycliques ou en réseau présentant en moyenne par molécule au moins 3 atomes d'hydrogène liés à des atomes de silicium différents et dont les radicaux organiques liés aux atomes de silicium sont choisis parmi les radicaux méthyle, éthyle et 60 % molaire au moins de ces radicaux étant des radicaux méthyle, et présentant une viscosité allant de 10 à 5 000 mPa.s à 25°C, le produit (b) étant utilisé en quantité telle que le rapport molaire des fonctions hydrure de (b) sur les groupes vinyle de (a) est compris entre 1,1 et 4;
      (c) une quantité catalytiquement efficace d'un catalyseur au platine ;
      (d) 0 à 120 parties en poids, de charge (s) siliceuse(s) pour 100 parties en poids de l'ensemble des polyorganosiloxanes (a) + (b) ;

où jusqu'à 50 % en poids du polymère (a) est remplacé par un copolymère en réseau comportant les motifs triméthylsiloxyles, méthylvinylsiloxyles et $SiO_{4/2}$ dans lequel 2,5 à 10 % molaire des atomes de silicium comportant un groupe vinyle et dans lequel le rapport molaire des groupes triméthylsiloxyles au groupe $SiO_{4/2}$ est compris entre 0,5 et 1 ;

(A2) les compositions monocomposantes réticulant à la chaleur par des réactions de polyaddition (compositions dites de type "Elastomère Vulcanisable à Chaud" de polyaddition), qui comprennent :

(a') 100 parties en poids d'une gomme polydiorganosiloxane qui est un homopolymère ou copolymère linéaire présentant en moyenne par molécule au moins 2 groupes vinyles liés à des atomes de silicium diférents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux étant des radicaux méthyle, et ladite gomme présentant une viscosité d'au moins 500.000 mPa.s à 25°C ;

(b') au moins un polyorganohydrogénosiloxane choisi parmi les homopolymères et les copolymères linéaires présentant en moyenne par molécule au moins 3 atomes d'hydrogène liés à des atomes de silicium différents, situés dans la chaîne et éventuellement en bouts de chaîne, dont les radicaux organiques liés aux atomes de silicium sont choisis parmi les radicaux méthyle, éthyle, phényle, 60 % molaire au moins de ces radicaux étant des radicaux méthyle, et présentant une viscosité allant de 10 à 5 000 mPa.s à 25°C, le produit (b') étant utilisé en quantité telle que le rapport molaire des fonctions hydrures de (b') sur les groupes vinyle de (a') est compris entre 0,4 et 10 ;

(c') une quantité catalytiquement efficace d'un catalyseur au platine ;

(d') 0,5 à 120 partie(s) en poids de charge(s) siliceuse(s) pour 100 parties en poids de l'ensemble des polyorganosiloxanes (a') + (b') ;

(A3) les compositions monocomposantes de type "Elastomère Vulcanisable à Chaud", comprenant :

(a") 100 parties en poids d'une gomme polydiorganosiloxane qui est un homopolymère ou un copolymère linéaire présentant en moyenne par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux étant des radicaux méthyle, et ladite gomme présentant une viscosité d'au moins 1 million de mPa.s à 25°C ;

(b") 0,1 à 7 parties en poids d'un peroxyde organique ;

(c") 0,5 à 120 parties en poids de charge(s) siliceuse(s) pour 100 parties en poids de gomme (a") ;

(d") 1 à 10 parties en poids d'huile(s) polydiméthylsiloxane(s) à extrémités silanols, ayant une viscosité allant de 10 à 5.000 mPa.s à 25°C ; et

(e") 0,01 à 4 parties en poids de méthacryloxyalkyltrialcoxysilane ou d'acryloxyalkyltrialcoxysilane;

\* un ingrédient (B), qui est hydrophile et osmotiquement actif, consistant dans une matière active antitartre (B1) choisie parmi les métaphosphates de formule $M_m(PO_3)_m$ (IV) où M est un cation ammonium, sodium, potassium ou aluminium et m varie de 3 à 30, ladite matière active étant prise seule ou en association avec un agent auxiliaire hydrophile (B2), dispersé de façon homogène au sein de l'ingrédient silicone (A), la quantité de matière active (B1) et éventuellement d'agent auxilliaire (B2), par rapport au poids de l'ensemble (A) + (B1) + éventuellement (B2), allant de 5 à 50 % en poids ;

\* avec la particularité selon laquelle la matière active antitartre est libérée au cours du temps, dans un milieu aqueux, hors de l'ingrédient silicone (A) durci en élastomère, selon une cinétique sensiblement d'ordre zéro.

2. Composition matricielle selon la revendication 1, **caractérisé en ce que** la matière active antitartre (B1) consiste dans les métaphosphates hydrophiles de formule $M_m (PO_3)_m$ (IV) où M représente le sodium ou le potassium et m varie de 6 à 22.

3. Composition matricielle selon la revendication 1 ou 2 dans lequel la composition polyorganosiloxane (A) est réticulée ou durcie en un élastomère silicone.

4.  Procédé pour lutter contre la formation et le dépôt de tartre dans des appareils en contact avec un milieu aqueux **caractérisé en ce qu'**il consiste à enchaîner les étapes suivantes :

    1) réticulation ou durcissement en élastomère de la composition polyorganosiloxane (A) au sein de laquelle est dispersé l'ingrédient actif (B), (A) et (B) étant tels que définis dans la revendication 1 ou 2 ; puis

    2) immersion dans le milieu aqueux à traiter d'une quantité adaptée de l'élastomère silicone obtenu à l'issue de l'étape 1 ;

    en vue de libérer dans le milieu aqueux une quantité contrôlée de matière active antitartre.

5.  Procédé selon la revendication 4, **caractérisé en ce que** les appareils en contact avec un milieu aqueux qui sont traités, sont des dispositifs industriels de distribution d'eau potable ou non, froide ou chaude ; des appareils échangeurs de chaleur ; des chaudières industrielles génératrices de vapeur d'eau ; des unités de dessalement d'eau de mer ; et d'autres dispositifs industriels comprenant un milieu aqueux renfermant typiquement des cations alcalino-terreux.

**Patentansprüche**

1.  Organosiliciumverbindung enthaltende Matrixzusammensetzung mit Kesselstein verhindernder Wirkung, **dadurch gekennzeichnet, dass** sie umfasst:

    *   einen Bestandteil (A), der aus einer teilweise vernetzten oder nicht vernetzten Polyorganosiloxanzusammensetzung besteht, die bei Raumtemperatur (23°C) oder unter der Einwirkung einer höheren Temperatur als die Raumtemperatur zu einem wasserdampfdurchlässigen Elastomer härtbar ist, wobei besagte Polyorganosiloxanzusammensetzung aus der Gruppe ausgewählt ist, die gebildet wird von:

        (A1) den Zweikomponentenzusammensetzungen, die bei Raumtemperatur oder in der Wärme durch Polyadditionsreaktionen vernetzen, die umfassen:

        (a) 100 Gew.-Teile lineares Polydiorganosiloxanöl, das an jedem Kettenende durch eine Vinyldiorganosilyleinheit blockiert ist, dessen organische, an die Siliciumatome gebundene Reste ausgewählt sind unter den Resten Methyl, Ethyl und Phenyl, wobei wenigstens 60 Mol-% dieser Reste Methylreste sind, und das eine Viskosität von 400 bis 50 000 mPa·s bei 25°C aufweist;
        (b) wenigstens ein Polyorganohydrogensiloxan, das ausgewählt ist unter den linearen, cyclischen oder vernetzten Homopolymeren und Copolymeren, das im Mittel pro Molekül wenigstens 3 an verschiedene Siliciumatome gebundene Wasserstoffatome aufweist und dessen organische, an die Siliciumatome gebundene Reste ausgewählt sind unter den Resten Methyl, Ethyl, und wobei wenigstens 60 Mol-% dieser Reste Methylreste sind, und das eine Viskosität von 10 bis 5 000 mPa·s bei 25°C aufweist, wobei das Produkt (b) in einer solchen Menge verwendet wird, dass das Molverhältnis der Hydridfunktionen von (b) zu den Vinylgruppen von (a) zwischen 1,1 und 4 liegt;
        (c) eine katalytisch wirksame Menge eines Platinkatalysators;
        (d) 0 bis 120 Gew.-Teile kieselsäurehaltige/r Füllstoffe/Füllstoff auf 100 Gew.-Teile der Gesamtheit der Polyorganosiloxane (a) + (b);

    worin bis zu 50 Gew.-% des Polymers (a) ersetzt sind duch ein vernetztes Copolymer, das die Trimethylsiloxyl-, Methylvinylsiloxyl- und $SiO_{4/2}$-Einheiten umfasst, worin 2,5 bis 10 Mol-% der Siliciumatome eine Vinylgruppe umfassen und worin das Molverhältnis der Trimethylsiloxylgruppen zur $SiO_{4/2}$-Gruppe zwischen 0,5 und 1 liegt;
        (A2) den Einkomponentenzusammensetzungen, die in der Wärme durch Polyadditionsreaktionen vernetzen (die genannt werden Zusammensetzungen vom Typ "heiß vulkanisierbares Elastomer" zur Polyaddition), die umfassen:

        (a') 100 Gew.-Teile eines Polydiorganosiloxangummis, der ein lineares Homopolymer oder Copolymer ist, der im Mittel pro Molekül wenigstens 2 an verschiedene Siliciumatome gebundene Vinylgruppen aufweist, die sich in der Kette und/oder an den Kettenenden befinden, dessen, andere organische, an die Siliciumatome gebundene Reste ausgewählt sind unter den Resten Methyl, Ethyl, Phenyl, wobei wenigstens 60 Mol-% dieser anderen Reste Methylreste sind, und besagter Gummi eine Viskosität von wenigstens 500.000 mPa·s bei 25°C aufweist;

(b') wenigstens ein Polyorganohydrogensiloxan, das ausgewählt ist unter den linearen Homopolymeren und Copolymeren, das im Mittel pro Molekül wenigstens 3 an verschiedene Siliciumatome gebundene Wasserstoffatome aufweist, die sich in der Kette und gegebenenfalls an den Kettenenden befinden, dessen organische, an die Siliciumatome gebundene Reste ausgewählt sind unter den Resten Methyl, Ethyl, Phenyl, wobei wenigstens 60 Mol-% dieser Reste Methylreste sind, und das eine Viskosität von 10 bis 5 000 mPa·s bei 25°C aufweist, wobei das Produkt (b') in einer solchen Menge verwendet wird, dass das Molverhältnis der Hydridfunktionen von (b') zu den Vinylgruppen von (a') zwischen 0,4 und 10 liegt;

(c') eine katalytisch wirksame Menge eines Platinkatalysators;

(d') 0,5 bis 120 Gew.-Teile kieselsäurehaltige/r Füllstoffe/Füllstoff auf 100 Gew.-Teile der Gesamtheit der Polyorganosiloxane (a') + (b');

(A3) den Einkomponentenzusammensetzungen vom Typ "heiß vulkanisierbares Elastomer", die umfassen:

(a") 100 Gew.-Teile eines Polydiorganosiloxangummis, der ein lineares Homopolymer oder Copolymer ist, das im Mittel pro Molekül wenigstens 2 an verschiedene Siliciumatome gebundene Vinylgruppen aufweist, die sich in der Kette und/oder an den Kettenenden befinden, dessen andere organische, an die Siliciumatome gebundene Reste ausgewählt sind unter den Resten Methyl, Ethyl, Phenyl, wobei wenigstens 60 Mol-% dieser anderen Reste Methylreste sind, und besagter Gummi eine Viskosität von wenigstens 1 Million mPa·s bei 25°C aufweist;

(b") 0,1 bis 7 Gew.-Teile eines organischen Peroxids;

(c") 0,5 bis 120 Gew.-Teile kieselsäurehaltige/r Füllstoffe/Füllstoff auf 100 Gew.-Teile Gummi (a");

(d") 1 bis 10 Gew.-Teile Polydimethylsiloxanöl(e) mit Silanolenden mit einer Viskosität von 10 bis 5.000 mPa·s bei 25°C; und

(e") 0,01 bis 4 Gew.-Teile Methacryloxyalkyltrialkoxysilan oder Acryloxyalkyltrialkoxysilan;

* einen Bestandteil (B), der hydrophil und osmotisch aktiv ist, der aus einem Kesselstein verhindernden aktiven Material (B1) besteht, das ausgewählt ist unter den Metaphosphaten der Formel $M_m(PO_3)_m$ (IV), worin M ein Ammonium-, Natrium-, Kalium- oder Aluminiumkation ist und m von 3 bis 30 variiert, wobei besagtes aktives Material allein oder in Kombination mit einem hydrophilen Hilfsmittel (B2) genommen wird, der homogen in dem Siliconbestandteil (A) dispergiert ist, wobei die Menge an aktivem Material (B1) und gegebenenfalls an Hilfsmittel (B2), bezogen auf das Gewicht der Gesamtheit (A) + (B1) + gegebenenfalls (B2), von 5 bis 50 Gew.-% reicht;

* mit der Besonderheit, gemäß der das Kesselstein verhindernde aktive Material im Laufe der Zeit in einem wässrigen Medium aus dem Siliconbestandteil (A), der zu Elastomer gehärtet ist, gemäß einer Kinetik von fast nullter Ordnung freigesetzt wird.

2. Matrixzusammensetzung gemäß Anspruch 1, **dadurch gekennzeichnet, dass** das Kesselstein verhindernde aktive Material (B1) aus den hydrophilen Metaphosphaten der Formel $M_m(PO_3)_m$ (IV) besteht, worin M Natrium oder Kalium darstellt und m von 6 bis 22 variiert.

3. Matrixzusammensetzung gemäß Anspruch 1 oder 2, worin die Polyorganosiloxanzusammensetzung (A) zu einem Siliconelastomer vernetzt oder gehärtet ist.

4. Verfahren, um die Bildung und die Ablagerung von Kesselstein in Apparaturen zu bekämpfen, die im Kontakt mit einem wässrigen Medium sind, **dadurch gekennzeichnet, dass** es darin besteht, die folgenden Schritte aneinander zu reihen:

1) Vernetzung oder Härtung zu Elastomer der Polyorganösiloxanzusammensetzung (A), in der der aktive Bestandteil (B) dispergiert ist, wobei (A) und (B) so wie in Anspruch 1 oder 2 definiert sind; dann

2) Eintauchen in das zu behandelnde wässrige Medium einer geeigneten Menge des Siliconelastomers, das am Ende von Schritt 1 erhalten wurde;

um in dem wässrigen Medium eine kontrollierte Menge an Kesselstein verhinderndem aktivem Material freizusetzen.

5. Verfahren gemäß Anspruch 4, **dadurch gekennzeichnet, dass** die Apparaturen im Kontakt mit einem wässrigen Medium, die behandelt werden, industrielle Vorrichtungen zur Verteilung von trinkbarem oder nicht trinkbarem, kaltem oder heißem Wasser; Wärmetauscherapparaturen; industrielle, Wasserdampf erzeugende Kessel; Meerwasserentsalzungeinheiten; und weitere industrielle Anlagen, die ein wässriges Medium umfassen, das typischerweise Erdalkalikationen enthält, sind.

**Claims**

1. Organosilicon matrix composition with a scale-inhibiting effect, **characterized in that** it comprises:

   * an ingredient (A) composed of a partially crosslinked or noncrosslinked polyorganosiloxane composition which can be cured, at ambient temperature (23°C) or under the effect of a temperature greater than ambient temperature, to give an elastomer which .is permeable to water vapour, the said polyorganosiloxane composition being chosen from the group formed by:

      (A1) two-component compositions which crosslink at ambient temperature or with heating by polyaddition reactions, which comprise:

         (a) 100 parts by weight of linear polydiorganosiloxane oil blocked at each chain end by a vinyldiorganosilyl unit, for which the organic radicals bonded to the silicon atoms are chosen from methyl, ethyl and phenyl radicals, at least 60 mol% of these radicals being methyl radicals, and exhibiting a viscosity ranging from 400 to 50 000 mPa·s at 25°C;
         (b) at least one polyorganohydrosiloxane chosen from linear, cyclic or network homopolymers and copolymers exhibiting on average, per molecule, at least 3 hydrogen atoms bonded to different silicon atoms and for which the organic radicals bonded to the silicon atoms are chosen from methyl and ethyl radicals, at least 60 mol% of these radicals being methyl radicals, and exhibiting a viscosity ranging from 10 to 5 000 mPa·s at 25°C, the product (b) being used in an amount such that the molar ratio of the hydride functional groups of (b) to the vinyl groups of (a) is between 1.1 and 4;
(c) a catalytically effective amount of a platinum catalyst;
(d) 0 to 120 parts by weight of siliceous filler(s) per 100 parts by weight of the combination of the polyorganosiloxanes (a) + (b);

where up to 50% by weight of the polymer (a) is replaced by a network copolymer comprising trimethylsiloxyl, methylvinylsiloxyl and $SiO_{4/2}$ units in which 2.5 to 10 mol% of the silicon atoms comprise a vinyl group and in which the molar ratio of the trimethylsiloxyl groups to the $SiO_{4/2}$ group is between 0.5 and 1;
(A2) single-component compositions which crosslink with heating by polyaddition reactions (compositions said to be of polyaddition "Heat Cured Elastomer" type), which comprise:

         (a') 100 parts by weight of a polydiorganosiloxane gum which is a linear homopolymer or copolymer exhibiting on average, per molecule, at least 2 vinyl groups bonded to different silicon atoms, situated in the chain and/or at the chain ends, for which the other organic radicals bonded to the silicon atoms are chosen from methyl, ethyl and phenyl radicals, at least 60 mol% of these other radicals being methyl radicals, the said gum exhibiting a viscosity of at least 500 000 mPa·s at 25°C;
         (b') at least one polyorganohydrosiloxane chosen from linear homopolymers and copolymers exhibiting on average, per molecule, at least 3 hydrogen atoms bonded to different silicon atoms, situated in the chain and optionally at the chain ends, for which the organic radicals bonded to the silicon atoms are chosen from methyl, ethyl and phenyl radicals, at least 60 mol% of these radicals being methyl radicals, and exhibiting a viscosity ranging from 10 to 5 000 mPa·s at 25°C, the product (b') being used in an amount such that the molar ratio of the hydride functional groups of (b') to the vinyl groups of (a') is between 0.4 and 10;
         (c') a catalytically effective amount of a platinum catalyst;
         (d') 0.5 to 120 parts by weight of siliceous filler(s) per 100 parts by weight of the combination of the polyorganosiloxanes (a') + (b');

(A3) single-component compositions of "Heat Cured Elastomer" type, comprising:

(a") 100 parts by weight of a polydiorganosiloxane gum which is a linear homopolymer or copolymer exhibiting on average, per molecule, at least 2 vinyl groups bonded to different silicon atoms, situated in the chain and/or at the chain ends, for which the other organic radicals bonded to the silicon atoms are chosen from methyl, ethyl and phenyl radicals, at least 60 mol% of these other radicals being methyl radicals, the said gum exhibiting a viscosity of at least 1 million mPa·s at 25°C;
(b") 0.1 to 7 parts by weight of an organic peroxide;
(c") 0.5 to 120 parts by weight of siliceous filler(s) per 100 parts by weight of gum (a") ;
(d") 1 to 10 parts by weight of polydimethylsiloxane oil(s) comprising silanol ends with a viscosity ranging from 10 to 5 000 mPa·s at 25°C; and
(e") 0.01 to 4 parts by weight of methacryloyloxyalkyltrialkoxysilane or acryloyloxyalkyltrialkoxysilane;

* an ingredient (B), which is hydrophilic and osmotically active, composed of a scale-inhibiting active material (B1) chosen from metaphosphates of formula $M_m(PO_3)_m$ (IV), where M is an ammonium, sodium, potassium or aluminium cation and m varies from 3 to 30, the said active material being taken alone or in combination with a hydrophilic additive (B2) dispersed homogeneously within the silicone ingredient (A), the amount of active material (B1) and optionally of additive (B2), with respect to the weight of the combination (A) + (B1) + optionally (B2), ranging from 5 to 50% by weight;
* with the distinguishing feature according to which the scale-inhibiting active material is released over time, into an aqueous medium, from the silicone ingredient (A) cured to an elastomer, according to substantially zero order kinetics.

2. Matrix composition according to claim 1, **characterized in that** the scale-inhibiting active material (B1) is composed of hydrophilic metaphosphates of formula $M_m(PO_3)_m$ (IV) where M represents sodium or potassium and m varies from 6 to 22.

3. Matrix composition according to claim 1 or 2, in which the polyorganosiloxane composition (A) is crosslinked or cured to a silicone elastomer.

4. Process for combating the formation and the deposition of scale in devices in contact with an aqueous medium, **characterized in that** it consists in linking together the following stages:

1) crosslinking or curing to an elastomer the polyorganosiloxane composition (A) within which the active ingredient (B) is dispersed, (A) and (B) being as defined in claim 1 or 2; then
2) immersing, in the aqueous medium to be treated, an appropriate amount of the silicone elastomer obtained on conclusion of stage 1;

for the purpose of releasing, into the aqueous medium, a controlled amount of scale-inhibiting active material.

5. Process according to claim 4, **characterized in that** the devices in contact with an aqueous medium which are treated are industrial devices for the distribution of drinking or nondrinking and hot or cold water; heat exchangers; steam-generating industrial boilers; sea water desalination units; and other industrial devices comprising an aqueous medium typically including alkaline earth metal cations.

FIGURE 1

FIGURE 2